# EUROPÄISCHE PATENTSCHRIFT

(11) **EP 0 697 546 B1**
(45) Veröffentlichungstag und Bekanntmachung des Hinweises auf die Patenterteilung: **01.10.1997**
(21) Anmeldenummer: 94112826.6
(22) Anmeldetag: 17.08.1994
(51) Int. Cl.: F16H 3/14, F16D 1/08, F16K 31/04

(54) **Getriebe für einen mit Federrücklauf ausgerüsteten Stellantrieb**
Transmission for actuator equipped with spring-return mechanism
Transmission pour un actionneur équipé d'un dispositif de rappel à ressort

(43) Veröffentlichungstag der Anmeldung: 21.02.1996
(73) Patentinhaber: JOHNSON SERVICE COMPANY, Milwaukee, Wisconsin 53201 (US); JOVENTA AG, CH-8733 Eschenbach SG (CH)
(72) Erfinder: Birchmeier, Werner, CH-8645 Jona (CH)
(74) Vertreter: Albrecht, Rainer Harald, Dr.-Ing.

(56) Entgegenhaltungen:
- DE-A- 2 133 237
- US-A- 2 502 356

## Beschreibung

Die Erfindung betrifft ein Getriebe für einen mit Federrücklauf ausgerüsteten Stellantrieb.

Stellantriebe mit Federrücklauf werden zur Betätigung von Stellgliedern, insbesondere Klappen, in Heizungs-, Klima- und tungsanlagen vielfach eingesetzt. Derartige Stellantriebe, im folgenden auch als Federrücklaufantriebe bezeichnet, enthalten eine Rückstellfeder, die durch einen Motor mit Untersetzungsgetriebe gespannt wird. Die in der Rückstellfeder gespeicherte Energie wird freigesetzt, sobald der elektrische Motor stromlos wird. Durch den Federrücklauf ist gewährleistet, daß bei Stromausfall das Stellglied in eine Sicherheitsstellung, üblicherweise in die Schließstellung, bewegt wird.

Die Stellantriebe werden in der Praxis sowohl links- als auch rechtsseitig an Stellgliedern, beispielsweise Lüftungsklappen, montiert. Die Wahl der Montageseite richtet sich nach den Platzverhältnissen in einer bestehenden Anlage. Mit einem Wechsel der Montageseite ändert sich allerdings auch die Drehrichtung einer Klappe. Öffnet eine Klappe beispielsweise von links betrachtet im Uhrzeigersinn, so öffnet sie von rechts betrachtet im Gegenuhrzeigersinn.

Stellantriebe mit Federrücklauf enthalten im allgemeinen nur eine Rückstellfeder. Der Federrücklauf und die Drehrichtung der dem Stellglied zugeordneten Abtriebswelle des Stellantriebs liegen fest.

Im Rahmen der bekannten Maßnahmen ist dem Stellantrieb stets eine bestimmte Montagerichtung zugeordnet.

Es ist bekannt, die an das Stellglied anzuschließende Abtriebswelle um 180° zu drehen, um auf diese Weise eine Anpassung an die Klappendrehrichtung vorzunehmen. Dabei muß allerdings praktisch immer als nachteilig in Kauf genommen werden, daß nach Wenden der Abtriebswelle Bedienungs- und Anschlußteile, beispielsweise Hilfsschalter, Handaufzug, Anschlußklemmen, Leiterplatten, und dergleichen, nicht oder nur schlecht zugänglich sind.

Der Erfindung liegt die Aufgabe zugrunde, ein Getriebe für einen mit Federrücklauf ausgerüsteten Stellantrieb anzugeben, welches eine Drehrichtungsumkehr der dem Stellglied zugeordneten Abtriebswelle ermöglicht.

Gegenstand der Erfindung und Lösung dieser Aufgabe ist ein Getriebe für einen mit Federrücklauf ausgerüsteten Stellantrieb, mit
einem dem Stellantrieb zugeordneten Antriebsritzel,
einem Zwischenritzel, welches mit dem Antriebsritzel kämmt,
einer Abtriebswelle mit einer Kupplung für ein Stellglied und
zwei auf derselben Drehachse axial in Reihe angeordneten Rädern mit jeweils einer Außenverzahnung und jeweils einer die Abtriebswelle mit Ringspalt umfassenden, drehbar gelagerten Nabe,
wobei das Antriebsritzel mit der Außenverzahnung eines der beiden Räder im Eingriff steht sowie das Zwischenritzel in die Außenverzahnung des anderen Rades eingreift und wobei in dem Ringspalt zwischen der Abtriebswelle und den Rädern eine Kupplungshülse angeordnet ist, welche mit der Abtriebswelle lösbar verbunden sowie mit der Nabe eines der Räder formschlüssig gekuppelt ist.

Das von dem Antriebsritzel angetriebene Zwischenritzel weist eine dem Antriebsritzel entgegengesetzte Drehrichtung auf. Folglich enthält das erfindungsgemäße Getriebe zwei Räder, die zeitsynchron mit dem Antriebsritzel, jedoch in unterschiedlicher Drehrichtung, umlaufen. Die Kupplungshülse ist austauschbar und stellt gleichsam ein Schaltelement dar, welches wahlweise die Bewegung des einen oder anderen Rades auf die dem Stellglied zugeordnete Abtriebswelle überträgt. Die Kupplungshülse erfordert keine eigene, gehäuseseitige Lagerung und ist daher leicht austauschbar.

Für die weitere Ausgestaltung des erfindungsgemäßen Getriebes bieten sich verschiedene konstruktive Lösungen an. Eine bevorzugte Ausführung des erfindungsgemäßen Getriebes ist dadurch gekennzeichnet, daß die Naben der Räder jeweils eine Innenverzahnung aufweisen, die mit einem Zahnkranz am Umfang der Kupplungshülse in Eingriff bringbar ist. Eine gleichmäßige Übertragung des Drehmomentes ist bei dieser Ausführung sichergestellt. In weiterer Ausgestaltung lehrt die Erfindung, daß die Kupplungshülse einen an den Zahnkranz anschließenden glattzylinderischen Abschnitt aufweist, der relativ zur Nabe der Räder drehbar ist. Zweckmäßigerweise sind die Naben der beiden von dem Antriebsritzel bzw. dem Zwischenritzel angetriebenen Räder identisch, also mit gleichen Abmessungen und gleicher Verzahnung, ausgebildet. Die Kupplungshülse erstreckt sich durch den von beiden Radnaben begrenzten Ringspalt, wobei eine Hälfte der Kupplungshülse mit einem zur Innenverzahnung der Radnaben korrespondierenden Zahnkranz und die andere Hälfte glattzylindrisch ausgebildet ist. Die Kupplungshülse ist wahlweise an der dem Stelltrieb zu- oder abgewandten Stirnseite des Gehäuses in den Ringspalt zwischen den Radnaben und der Abtriebswelle einführbar. Zur Sicherung der Kupplungshülse ist nach bevorzugter Ausführungsform der Erfindung eine an der Abtriebswelle befestigte Rastfeder vorgesehen.

Der Stellweg des Federrücklaufantriebes ist in der Regel so begrenzt, daß die Abtriebswelle Winkelbewegungen von maximal 180° ausführt, wobei die Drehbewegung abhängig von dem Einbau der Kupplungshülse im Uhrzeigersinn oder im Gegenuhrzeigersinn erfolgt. Die Räder bestehen aus der Nabe und einer Kreissegmentscheibe, an deren Umfang die Außenverzahnung angeordnet ist. Die Ausrichtung der Kreissegmentscheibe und die Länge des Kreisbogensegments sind dem Stellweg des Federrücklaufantriebs sowie der Drehrichtung der Abtriebswelle angepaßt.

Im folgenden wird die Erfindung anhand einer lediglich ein Ausführungsbeispiel darstellenden Zeichnung erläutert. Es zeigen in schematischer Darstellung
- **Fig. 1**: einen Längsschnitt durch das erfindungsgemäße Getriebe,
- **Fig. 2**: den Schnitt A-A in Fig. 1 und
- **Fig. 3**: den Schnitt B-B in Fig. 1.

Das in den Figuren dargestellte Getriebe ist für einen mit Federrücklauf ausgerüsteten Stellantrieb, im folgenden auch Federrücklaufantrieb genannt, bestimmt. Zum grundsätzlichen Aufbau des Getriebes gehören ein an den Federrücklaufantrieb anschließbares Gehäuse 1, ein dem Stellantrieb zugeordnetes Antriebsritzel 2 sowie eine Abtriebswelle 3 mit einer Kupplung 4 für ein nicht dargestelltes Stellglied. Bei dem Stellglied mag es sich um eine Klappe in einer Heizungs-, Klima- oder Lüftungsanlage handeln.

Das Getriebe weist ferner ein mit dem Antriebsritzel 2 kämmendes Zwischenritzel 5 sowie zwei auf derselben Drehachse angeordnete Räder 6, 7 auf. Die Räder 6, 7 sind mit einer Außenverzahnung 8, 9 ausgerüstet und weisen jeweils eine die Abtriebswelle 3 mit Ringspalt umfassende Nabe 10, 11 auf. Die Räder 6, 7 sind ebenso wie das Antriebsritzel 2, das Zwischenritzel 5 sowie die Abtriebswelle 3 im Gehäuse 1 drehbar gelagert.

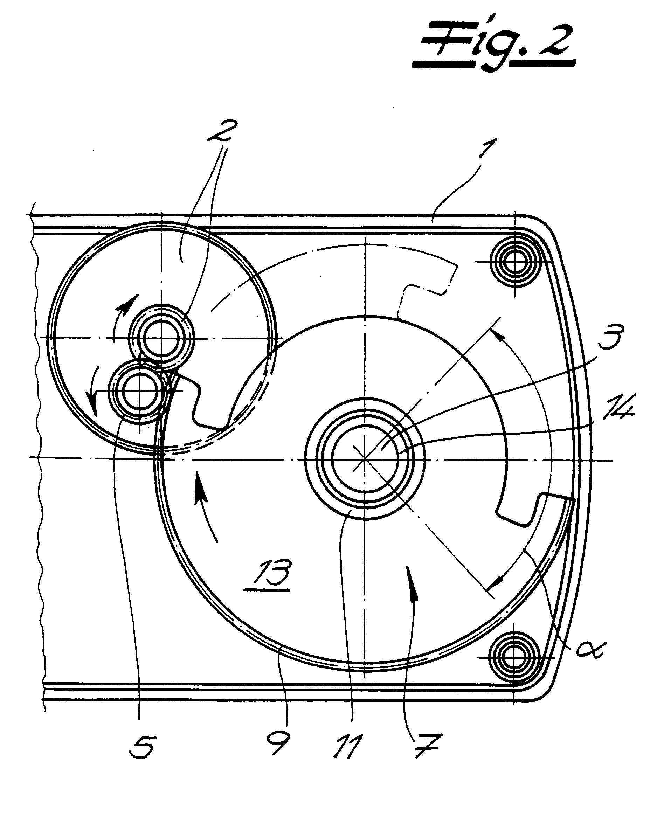

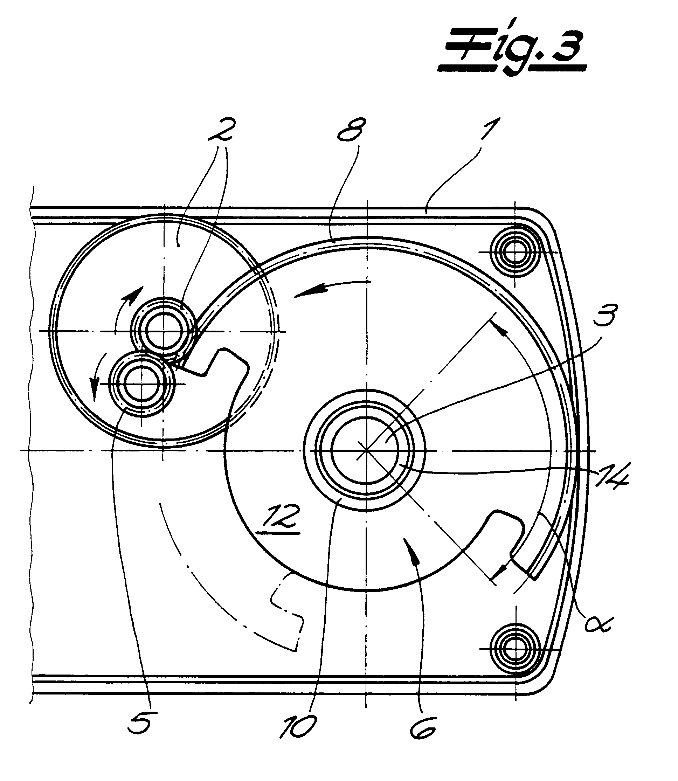

Die Fig. 2 und 3 zeigen eine Draufsicht auf die Räder 6, 7 und veranschaulichen die Kinematik der Anordnung. Die Räder 6, 7 bestehen aus der Nabe 10, 11 und einer Kreissegmentscheibe 12, 13, an deren Umfang die Außenverzahnung 8, 9 angeordnet ist. Das Antriebsritzel 2 steht mit der Außenverzahnung 8 des einen Rades 6 im Eingriff, während das Zwischenritzel 5 in die Außenverzahnung 9 des anderen Rades 7 eingreift. Da das Zwischenritzel 5 von dem Antriebsritzel 2 angetrieben ist, weist es eine gegenüber dem Antriebsritzel 2 gegenläufige Drehrichtung auf. Die Bewegung der Räder 6, 7 erfolgt synchron, jedoch ebenfalls in unterschiedlicher Drehrichtung. Die Bewegungsabläufe sind in den Fig. 2 und 3 durch Pfeile dargestellt. Bei einer Drehung des Antriebsritzels 2 im Uhrzeigersinn bewegen sich die Räder 6, 7 in der angegebenen Weise in die mit strichpunktierten Linien dargestellten Betriebsstellungen. Der dabei zurückgelegte Stellwinkel α beträgt im Ausführungsbeispiel 93°.

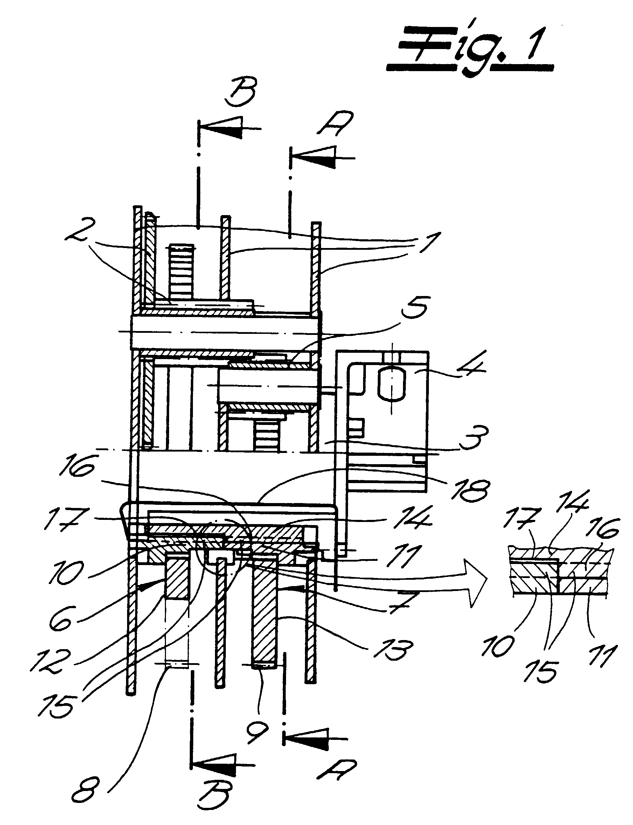

Der Fig. 1 entnimmt man, daß in dem Ringspalt zwischen der Abtriebswelle 3 und den Rädern 6, 7 eine Kupplungshülse 14 angeordnet ist, welche mit der Abtriebswelle 3 lösbar verbunden sowie mit der Nabe eines der Räder, hier der Nabe 11 des Rades 7, formschlüssig gekuppelt ist. Die achsengleich eingebauten Räder 6, 7 weisen nabenseitig jeweils eine Innenverzahnung 15 auf, die mit einem Zahnkranz 16 am Umfang der Kupplungshülse 14 in Eingriff bringbar ist. Durch die dadurch hergestellte formschlüssige Verbindung wird das Drehmoment unter Zwischenschaltung der Kupplungshülse 14 auf die Abtriebswelle 3 übertragen. Die Kupplungshülse 14 weist ferner einen an den Zahnkranz 16 anschließenden glattzylindrischen Abschnitt 17 auf, der relativ zur Nabe der Räder, hier der Nabe 10 des Rades 6, drehbar ist. Soll, wie im Ausführungsbeispiel dargestellt, die Drehrichtung der Abtriebswelle 3 derjenigen des Rades 7 entsprechen, so wird die hälftig verzahnte Kupplungshülse 14 von der der Kupplung 4 zugewandten Stirnseite des Gehäuses 1 in den Ringspalt eingeführt und in der dargestellten Position mittels einer Rastfeder 18, die an der Abtriebswelle 3 befestigt ist, gesichert. Der Zahnkranz 16 und die Innenverzahnung 15 an der Nabe 11 des Rades 7 stellen eine formschlüssige Verbindung her, die das Drehmoment von dem Rad 7 auf die Abtriebswelle 3 überträgt. Das gegensinnig angetriebene Rad 6 läuft an dem glattzylindrischen Abschnitt 17 der Kupplungshülse 14 frei. Soll die Drehrichtung der Abtriebswelle 3 derjenigen des Rades 6 entsprechen, so wird die Kupplungshülse 14 ausgebaut und von der der Kupplung 4 abgewandten Stirnseite des Gehäuses 1 in den Ringspalt eingeführt. In diesem Falle erfolgt der Kraftschluß dann von dem anderen Rad 6 über die Kupplungshülse 14 auf die Abtriebswelle 3.

## Patentansprüche

1. Getriebe für einen mit Federrücklauf ausgerüsteten Stellantrieb, - mit
einem dem Stellantrieb zugeordneten Antriebsritzel (2),
einem Zwischenritzel (5), welches mit dem Antriebsritzel (2) kämmt,
einer Abtriebswelle (3) mit einer Kupplung (4) für ein Stellglied und
zwei auf derselben Drehachse in Reihe angeordneten Rädern (6, 7) mit jeweils einer Außenverzahnung (8, 9) und jeweils einer die Abtriebswelle (3) mit Ringspalt umfassenden, drehbar gelagerten Nabe (10, 11),
wobei das Antriebsritzel (2) mit der Außenverzahnung (8) eines der beiden Räder im Eingriff steht sowie das Zwischenritzel (5) in die Außenverzahnung (9) des anderen Rades eingreift und wobei in dem Ringspalt zwischen der Abtriebswelle (3) und den Rädern (6, 7) eine Kupplungshülse (14) angeordnet ist, welche mit der Abtriebswelle (3) lösbar verbunden sowie mit der Nabe (10, 11) eines der Räder (6 oder 7) formschlüssig gekuppelt ist.

2. Getriebe nach Anspruch 1, wobei die Naben (10, 11) der Räder (6, 7) jeweils eine Innenverzahnung (15) aufweisen, die mit einem Zahnkranz (16) am Umfang der Kupplungshülse (14) in Eingriff bringbar sind.

3. Getriebe nach Anspruch 2, wobei die Kupplungshülse (14) einen an den Zahnkranz (16) anschließenden glattzylindrischen Abschnitt (17) aufweist, der relativ zur Nabe (10, 11) der Räder (6,7) drehbar ist.

4. Getriebe nach einem der Ansprüche 1 bis 3, wobei die Kupplungshülse (14) mittels einer an der Abtriebswelle (3) befestigten Rastfeder (18) in Axialrichtung gesichert ist.

5. Getriebe nach einem der Ansprüche 1 bis 4, wobei die Räder (6, 7) aus der Nabe (10, 11) und einer Kreissegmentscheibe (12, 13) bestehen, an deren Umfang die Außenverzahnung (8, 9) angeordnet ist.

## Claims

1. A transmission for an actuating drive equipped with a spring-return mechanism, having
a drive pinion (2) associated with the actuating drive,
an intermediate pinion (5) which meshes with the drive pinion (2),
a driven shaft (3) with a coupling (4) for an actuator, and
two wheels (6, 7) disposed in series on the same axis of rotation, each with external gearing (8. 9) and each with a rotatably mounted hub (10, 11) which surrounds the driven shaft (3) with an annular gap,
wherein the drive pinion (2) meshes with the external gearing (8) of one of the two wheels and the intermediate pinion (5) meshes with the external gearing (9) of the other wheel, and wherein a coupling sleeve (14) is disposed in the annular gap between the driven shaft (3) and the wheels (6, 7), which coupling sleeve is detachably joined to the driven shaft (3) and is positively coupled to the hub (10, 11) of one of the wheels (6 or 7).

2. A transmission according to claim 1, wherein the hubs (10, 11) of the wheels (6, 7) each comprise internal gearing (15) which can be brought into mesh with a toothed ring (16) at the periphery of the coupling sleeve (14).

3. A transmission according to claim 2, wherein the coupling sleeve (14) comprises a plain cylindrical section (17) which adjoins the toothed ring (16) and which can rotate in relation to the hubs (10, 11) of the wheels (6, 7).

4. A transmission according to any one of claims 1 to 3, wherein the coupling sleeve (14) is secured in the axial direction by means of a catch spring (18) fixed to the driven shaft (3).

5. A transmission according to any one of claims 1 to 4, wherein the wheels (6, 7) consist of the hub (10, 11) and of a circular segment disc (12, 13) at the periphery of which the external gearing (8, 9) is disposed.

## Revendications

1. Transmission pour un actionneur équipé d'un dispositif de rappel à ressort, comprenant un pignon d'attaque (2) associé à l'actionneur, un pignon intermédiaire (5) qui coopère avec le pignon d'attaque (2), un arbre de sortie (3) avec un dispositif d'accouplement (4) pour l'organe de réglage, et deux roues (6, 7) montées en ligne sur le même axe de rotation et comprenant chacune une denture extérieure (8, 9) et un moyeu (10, 11) qui enveloppe l'arbre de sortie (3) avec une fente annulaire, **caractérisée en ce** que le pignon d'attaque (2) s'engrène dans la denture extérieure (8) de l'une des deux roues alors que le pignon intermédiaire (5) s'engrène avec la denture extérieure (9) de l'autre roue, et que dans la fente annulaire entre l'arbre de sortie (3) et les roues (6, 7) est disposée une douille d'accouplement (14) qui est couplée à engagement positif et de manière amovible avec l'arbre de sortie (3) ainsi qu'avec le moyeu (10, 11) de l'une des roues (6 ou 7).

2. Transmission selon la revendication 1, caractérisée en ce que les moyeux (10, 11) des roues (6, 7) présentent à chaque fois une denture intérieure (15) qui peut être mise en prise avec une couronne dentée (16) à la périphérie de la douille d'accouplement (14).

3. Transmission selon la revendication 2, caractérisée en ce que la douille d'accouplement (14) comporte, à la suite de la couronne dentée (16), une section cylindrique lisse (17) laquelle peut être tournée par rapport au moyeu (10, 11) des roues (6, 7).

4. Transmission selon l'une des revendications 1 à 3, caractérisée en ce que la douille d'accouplement (14) est bloquée dans le sens axial au moyen d'un ressort à cran d'arrêt (18) fixé sur l'arbre de sortie (3).

5. Transmission selon l'une des revendications 1 à 4, caractérisée en ce que les roues (6, 7) sont constituées du moyeu (10, 11) et d'un disque circulaire segmenté (12, 13) sur la périphérie duquel est disposée la denture extérieure (8, 9).
